# EUROPEAN PATENT APPLICATION

(11) **EP 4 642 020 A1**
(43) Date of publication of application: **29.10.2025**
(21) Application number: 24315221.2
(22) Date of filing: 26.04.2024
(51) Int. Cl.: H04N 1/415, H04N 19/103, H04N 19/70, H04N 25/00, H04N 25/40

(54) **EVENT ENCODING SYSTEM FOR EVENT-BASED VISION SENSORS WITH ADAPTIVE ALLOCATION OF SCALAR AND VECTORIZED FORMATS**

(71) Applicant: Prophesee, 75012 Paris (FR)
(72) Inventor: Schwambach, Vitor, Grenoble (FR); Joubert, Damien, Rouen (FR); Dreher, Christian, Levallois-Perret (FR); Schon, Guillaume, Paris (FR); Chen, Tianfan, Paris (FR)
(74) Representative: de Jong, Jean Jacques

(57) **Abstract**

An event transmission method for an event-based vision sensor comprises the steps of reading a sequence of events from a row of an array of pixels of the vision sensor; setting an event count vectorization threshold at a value at least equal to two; counting a number of events present in a vector of consecutive pixels of the row; when the number of events is less than the vectorization threshold, encoding each event in a respective 32-bit word including a polarity, a column locator (X), and a row locator (Y); when the number of events is equal or greater than the vectorization threshold, encoding the events in a pair of consecutive 32-bit words, wherein: (i) a first of the consecutive words receives a column locator (X) corresponding to the beginning of the vector, and a row locator (Y), and (ii) a second of the consecutive words receives a bitmask that defines the presence of events in the vector by bits set at corresponding positions of the bitmask.

## Description

### Technical Field

The present disclosure relates to event-based vision sensors, especially to the formatting of event streams produced by such sensors.

### Background

An event-based camera or vision sensor produces a data stream corresponding to events occurring asynchronously in a pixel array of the sensor. An event is typically conveyed in the data stream in the form of a timestamp, position information, and a polarity ("on" for a rising change in brightness, or "off' for a declining change). Various data stream formats exist for encoding the event information, often based on the events being read-out from the array by rows.

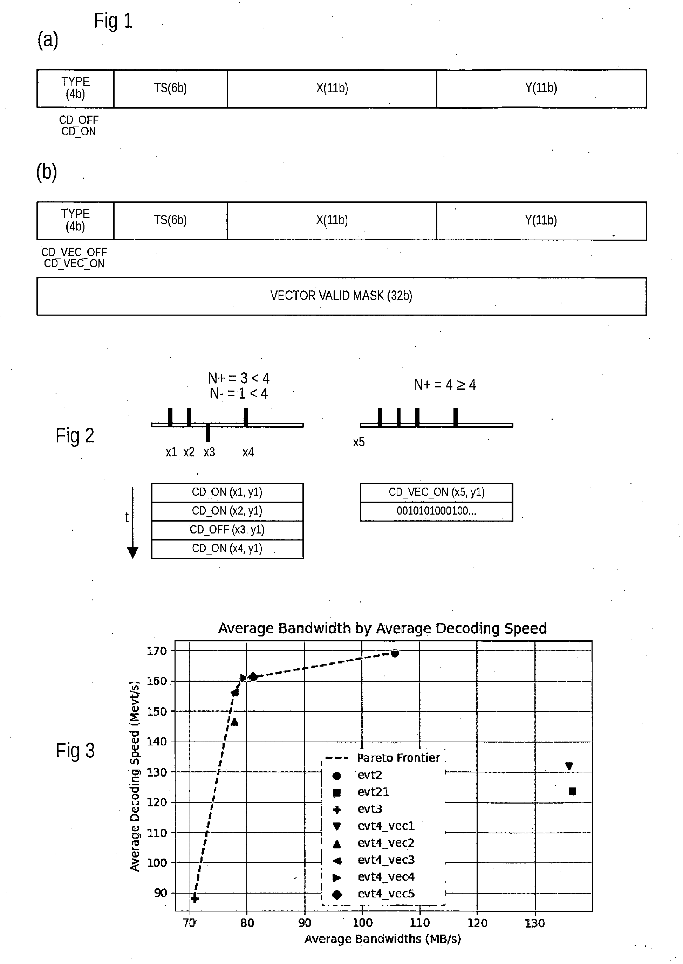

Figure 1(a) corresponds to the encoding of an event in a 32-bit word according to Prophesee's EVT 2.0 event stream data format, as defined at the following link:
https://docs.prophesee.ai/stable/data/encoding_formats/evt2.html

Each event is encoded in a 32-bit word, as shown. Such an encoding, where events are encoded in individual words, is referred to as "scalar" encoding. The word includes a 4-bit type field that indicates the polarity of the event by a corresponding code CD_ON or CD_OFF (where "CD" stands for "Change Detection"); a 6-bit timestamp TS; an 11-bit X-coordinate (the column position of the pixel); and an 11-bit Y-coordinate (the row position of the pixel). The 11 bits of the X and Y-coordinate fields allow to address individual pixels in a 2048x2048 array.

The events being read-out by rows, consecutive words conveying events of a same row have a same timestamp and a same Y-coordinate, which represents significant redundant data when the row contains many events.

Figure 1(b) corresponds to a vectorized encoding format designed to remove redundant information, according to Prophesee's EVT 2.1 event stream data format, as defined at the following link:
https://docs.prophesee.ai/stable/data/encoding_formats/evt21.html

Up to 32 events of same polarity in a vector of 32 consecutive pixels of a row are encoded in a pair of 32-bit words. The first word is similar to the word of figure 1(a), except that the X-coordinate defines the starting position of the vector in the row, and the type field indicates the global polarity of the events encoded in the vector. The second word is a 32-bit bitmask that defines the presence of events in the vector by bits set at corresponding positions of the bitmask.

The EVT 2.1 format, producing two 32-bit words for up to 32 events becomes more compact than the EVT 2.0 format when there are more than two events in each vector.

Prophesee's EVT 3.0 format combines the possibility of scalar and vectorized encoding, using 16-bit words. This format is defined at the following link:
https://docs.prophesee.ai/stable/data/encoding_formats/evt3.html

In practice, the vectorized encoding is used systematically when there are two or more events in a vector, where the vector corresponds to 8 or 12 pixels encoded in a 16-bit word.

### Summary

An event transmission method for an event-based vision sensor is generally provided, comprising the steps of reading a sequence of events from a row of an array of pixels of the vision sensor; setting an event count vectorization threshold at a value at least equal to two; counting a number of events present in a vector of consecutive pixels of the row; when the number of events is less than the vectorization threshold, encoding each event in a respective 32-bit word including a polarity, a column locator, and a row locator; when the number of events is equal or greater than the vectorization threshold, encoding the events in a pair of consecutive 32-bit words, wherein (i) a first of the consecutive words receives a column locator corresponding to the beginning of the vector, and a row locator, and (ii) a second of the consecutive words receives a bitmask that defines the presence of events in the vector by bits set at corresponding positions of the bitmask.

The method may include the steps of counting the number of events present in consecutive vectors; when the number of events is equal or greater than the event count vectorization threshold for each of a plurality of consecutive vectors, encoding the events in a tuple of 32-bit consecutive words, wherein (i) a first of the consecutive words receives a column locator corresponding to the beginning of the first of the plurality of vectors, the row locator, and a count of the plurality of vectors, and (ii) each further consecutive word up to the vector count receives a bitmask that defines the presence of events in the corresponding vector by bits set at corresponding positions of the bitmask.

When the number of events is above the vectorization threshold, the second of the consecutive words receives a mask-type identifier and the bitmask is incomplete by the size of the mask-type identifier, and the first of the consecutive words receives a field with a group of bits completing the bitmask.

The method may include the steps of measuring an event rate of the events produced by the sensor; and adjusting the vectorization threshold by increasing it when the measured event rate decreases.

The vectorization threshold may have a value of 3 or above.

The vectorization threshold may be equal to 3 or 4.

An event stream produced according to the above methods may include individual 32-bit words having a scalar type, each conveying a polarity and coordinates in the array of an isolated event; pairs of 32-bit words, wherein a first word of each pair has a vector type and conveys coordinates of a vector representing consecutive pixels of a row, and the second word is a bitmask that defines the presence of events in the vector by bits set at corresponding positions of the bitmask; and between two vector-type words of a same row, at least one batch of scalar-type words of same polarity corresponding to a scalar-encoded pixel vector of the row, wherein the word count of the batch is at least equal to 2.

The batch of scalar-type words may have a word-count ranging from 2 to 4.

### Brief Description of the Drawings

Embodiments will be exposed in the following description provided for exemplary purposes only, in relation to the appended drawings, in which:
Figure 1 illustrates a conventional scalar event encoding format and a conventional vectorized event encoding format;
Figure 2 illustrates the encoding of successive events of a row according to an encoding method with adaptive allocation of scalar and vectorized formats;
Figure 3 is a graph illustrating a performance comparison for various settings of an adaptive encoding allocation method;
Figure 4 illustrates a second embodiment of a vectorized encoding format; and
Figure 5 illustrates a third embodiment of a vectorized encoding format.

### Detailed Description

After conducting a series of benchmarks with use cases of the above mentioned EVT 2.0, 2.1 and 3.0 event stream data formats, the inventors have noted that there was still room for improvement in terms of event stream decoding resources vs. event stream compacity. The benchmarks were conducted by analyzing the event stream sequences produced in 40 different use cases including industrial, automotive, surveillance outdoors, indoors, structured light, deblurring, eye-tracking, fluid flow, volumetry, object counting...

After averaging the event stream bandwidths and the decoding speeds over all the scenarios, it appears that the EVT 3.0 format is the most compact with an average bandwidth of 70.79 MB/s, but also the most resource demanding with the lowest average decoding speed of 88.21 mega events per second (Mevt/s). The least resource demanding is the 2.0 format with an average decoding speed of 169.33 Mevt/s and an average bandwidth of 105.67 MB/s. The 2.1 format establishes a compromise with an average decoding speed of 123.67 Mevt/s but the highest average bandwidth of 136.5 MB/s.

A format is thus sought that approaches the lower decoding resources of the 2.0 format, while approaching the higher compacity of the 3.0 format.

A 32-bit word format is proposed that includes word-types for both scalar and vectorized event encoding, and enables the encoder to adaptively allocate the word-types according to a configurable event count vectorization threshold. In other words, if the number of same polarity events in a currently analyzed 32-pixel vector is greater or equal to the threshold, the vectorized encoding is used. Otherwise, if the event count is below the threshold, the scalar encoding is used. The threshold thus represents the minimum number of events in a vector to produce a vectorized encoding.

In practice, as shown below, a preferred choice for the threshold is 2 or above. Optimal results are achieved in average with a threshold of 3 or 4.

The benchmarking conducted for the very diverse scenarios showed that all scenarios produced a proportion of scalar encoded events where the choice of a scalar and a vectorized encoding was available (format EVT 3.0, and also the new formats discussed herein). Hence, an event stream encoded according to the new format includes a succession of 32-bit words of mixed vector and scalar types. In other words, the stream will include, from time to time, between two vector-type words of a same row, at least one batch of scalar-type words of same polarity corresponding to a scalar-encoded 32-pixel vector. Such a batch will have a word-count ranging from 1 to the threshold minus 1. When the threshold is chosen at least equal to 3, in many occurrences the word-count will be greater than 1.

The new event encoding format thus defines four different type codes for the 32-bit words used for encoding the events. Codes CD_OFF and CD_ON are used for encoding events in the scalar format, similar to format EVT 2.0, while two new codes CD_VEC_OFF, CD_VEC_ON (shown in figure 1(b)) are used for encoding events in the vectorized format, similar to format EVT 2.1.

Figure 2 illustrates an encoding of events from two vectors using an event count vectorization threshold of 4. The events for each vector may thus be encoded individually using the scalar format for each event or encoded globally using the vectorized format.

As shown, the first vector includes a succession of three positive events at positions x1, x2, x4, interspersed with one negative event at position x3. The number N+ of positive events being below the threshold of 4, each positive event is encoded in an individual 32-bit word. The same stands for the negative event having a count N- of 1. Thus, four successive 32-bit words are issued, in the order of the events in the vector, identifying the polarity in the type field by code CD_ON or CD_OFF, locating the column positions x1 to x4, and locating the row position y1. The words all convey the timestamp of the row (not shown).

The second vector includes four positive events. Since the count is greater or equal to four, all events are vectorized using a pair of 32-bit words. The first word has its type field set to code CD_VEC_ON, locates the column position x5 of the vector starting point, locates the row position y1, and conveys the timestamp of the row. The second word is a bitmask that has 1s at the positions of the events in the vector.

Figure 3 is a decoding speed vs. bandwidth diagram locating the average values of the above benchmarks for different encoding formats. The points evt2, evt21 and evt3 correspond to formats EVT 2.0, 2.1 and 3.0 discussed above. Points evt4_vec<i> correspond to the proposed adaptive event stream encoding with different event count vectorization thresholds i.

The optimal area in the graph is the top-left corner, representing the highest decoding speed and the highest event stream compacity. It shall be noted that this corner is most closely approached for event count vectorization thresholds between 3 and 5. The adaptive encoding with a threshold of 1 (evt4_vec1) and the conventional EVT 2.1 format are by far the least compact. The best thresholds appear to be 3 and 4.

Hence, preserving a proportion of scalar encoded events is beneficial in average, with an event count vectorization threshold of 3 or higher. This is true even in highly flickering environments that produce many events, because a significant number of events still remain isolated and sub-optimal for a vectorized encoding.

The encoder may be configured to dynamically adapt the threshold according to the measured event rate to improve the compacity and the decoding speed. In situations with a higher event rate, corresponding to flickering scenarios, a lower event count threshold may be selected to privilege vectorized encoding and compacity. In situations with a lower event rate, a higher event count threshold may be selected to privilege scalar encoding and decoding speed. The threshold may reach 33, in which case the event count in a 32-pixel vector will never reach that value, whereby the events are exclusively encoded as scalars. Conversely, the threshold may reach 1, in which case the events are exclusively encoded as vectors.

The encoder may be configured with several event rate ranges to which respective event count thresholds are assigned, typically increasing thresholds for decreasing event rates. The encoder is then configured to compare the measured event rate to the ranges and dynamically implement the threshold assigned to the corresponding range.

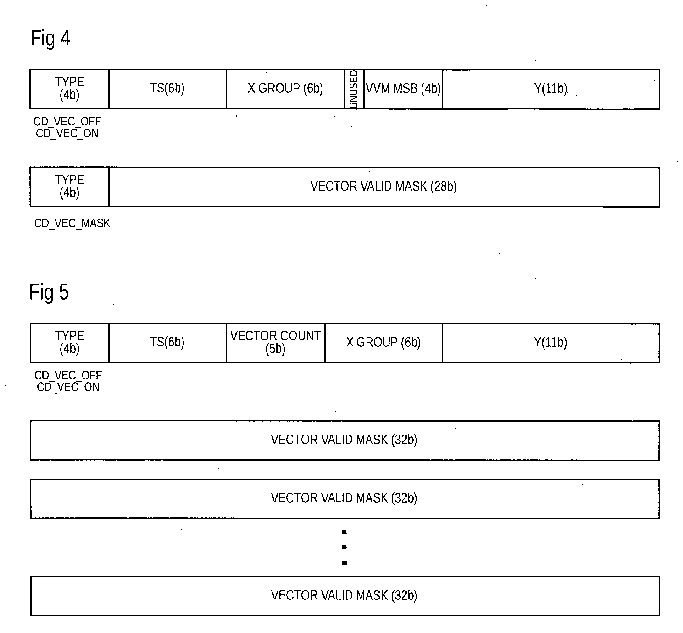

Figure 4 illustrates a second embodiment of a vectorized encoding format usable in an adaptive encoding allocation method. The second word of the vectorized format of figure 1(b) contains arbitrary data corresponding to a bitmask and may be confused by the decoder with a word of a known type, if for any reason the first word of the pair is lost or corrupted during the transmission.

To avoid this, in figure 4, the second word also has a 4-bit type-field, for which a corresponding type-code is defined, noted CD_VEC_MASK. The remaining 28 bits in the second word are used for the least significant bits of the 32-bit bitmask. The 4 most significant bits VVM MSB of the bitmask replace the least significant bits of the X-coordinate field of the first word. Hence, the X-coordinate field is truncated to 7 bits. In fact, only 6 of those 7 bits, designated X GROUP, suffice to identify 64 positions that are 32-bit aligned, assuming the missing 5 least significant bits are all 0. In other words, a 2048-pixel row is pre-partitioned into 64 32-pixel vectors (whereas the original format allowed a vector to start at any pixel in a row).

Figure 5 illustrates a third embodiment of a vectorized encoding format usable in an adaptive encoding allocation method. This format supports encoding same polarity events of multiple contiguous vectors in a tuple of words.

Five bits of the X-coordinate field of the first word are taken to convey a vector count, leaving 6 bits (X GROUP) to define the starting position of the first vector, assumed to be 32-bit aligned, like in figure 4. The second and subsequent words, up to the vector count defined in the first word, are 32-bit bitmasks associated respectively to the consecutive vectors starting at the position defined by X GROUP.

To implement the format of figure 5, the encoder is configured to count the number of same polarity events successively in consecutive vectors of a row. Each time the event count vectorization threshold is met for a current vector, the vector count is incremented, the current vector is encoded in a respective bitmask, and the next vector is examined.

When the currently examined vector has an event count no longer exceeding the threshold, the examination process is ended and the vector count is inserted in the first word.

In the previous embodiments, 32-pixel vectors have been disclosed over which same-polarity events were counted for using 32-bit bitmasks in the vectorized encoding, where each same-polarity event was indicated in the bitmask by setting a single bit. In other embodiments, events may be counted over a pixel vector regardless of their polarity, and each event is indicated in the bitmask by encoding the presence of the event and its polarity at a corresponding position. To maintain the 32-bit word format of the bitmasks, 16-pixel vectors would be used for the event counting.

## Claims

1. An event transmission method for an event-based vision sensor, the method comprising the following steps:
reading a sequence of events from a row of an array of pixels of the vision sensor;
setting an event count vectorization threshold at a value at least equal to two;
counting a number of events present in a vector of consecutive pixels of the row;
when the number of events is less than the vectorization threshold, encoding each event in a respective 32-bit word including a polarity, a column locator (X), and a row locator (Y);
when the number of events is equal or greater than the vectorization threshold, encoding the events in a pair of consecutive 32-bit words, wherein:
(i) a first of the consecutive words receives a column locator (X) corresponding to the beginning of the vector, and a row locator (Y), and
(ii) a second of the consecutive words receives a bitmask that defines the presence of events in the vector by bits set at corresponding positions of the bitmask.

2. The method of claim 1, comprising the following steps:
counting the number of events present in consecutive vectors;
when the number of events is equal or greater than the event count vectorization threshold for each of a plurality of consecutive vectors, encoding the events in a tuple of 32-bit consecutive words, wherein:
(i) a first of the consecutive words receives a column locator (X GROUP) corresponding to the beginning of the first of the plurality of vectors, the row locator (Y), and a count of the plurality of vectors, and
(ii) each further consecutive word up to the vector count receives a bitmask that defines the presence of events in the corresponding vector by bits set at corresponding positions of the bitmask.

3. The method of claim 1, wherein, when the number of events is above the vectorization threshold,
the second of the consecutive words receives a mask-type identifier and the bitmask is incomplete by the size of the mask-type identifier, and
the first of the consecutive words receives a field with a group of bits completing the bitmask.

4. The method of claim 1, comprising the following steps:
measuring an event rate of the events produced by the sensor; and
adjusting the vectorization threshold by increasing it when the measured event rate decreases.

5. The method of claim 1, wherein the vectorization threshold has a value of 3 or above.

6. The method of claim 1, wherein the vectorization threshold is equal to 3 or 4.

7. An event stream produced by an event-based vision sensor from an array of pixels, including:
individual 32-bit words having a scalar type, each conveying a polarity and coordinates in the array of an isolated event;
pairs of 32-bit words, wherein a first word of each pair has a vector type and conveys coordinates of a vector representing consecutive pixels of a row, and the second word is a bitmask that defines the presence of events in the vector by bits set at corresponding positions of the bitmask; and
between two vector-type words of a same row, at least one batch of scalar-type words of same polarity corresponding to a scalar-encoded pixel vector of the row, wherein the word count of the batch is at least equal to 2.

8. The event stream of claim 7, wherein the batch of scalar-type words has a word-count ranging from 2 to 4.
